# EUROPEAN PATENT APPLICATION

(11) **EP 3 514 456 A1**
(43) Date of publication of application: **24.07.2019**
(21) Application number: 18210776.3
(22) Date of filing: 06.12.2018
(51) Int. Cl.: F24C 7/08, A21B 1/24, H05B 6/64, A47J 37/06, F24C 15/32

(54) **OVEN**

(30) Priority: 17.01.2018 GB 201800767
(71) Applicant: Lincat Ltd, Lincoln, Lincolnshire LN6 3QZ (GB)
(72) Inventor: Jackson, Andrew, Lincoln, Lincolnshire LN6 3QZ (GB); White, Jonathan, Lincoln, Lincolnshire LN6 3QZ (GB)
(74) Representative: Dolleymores

(57) **Abstract**

An oven comprising a housing defining a cooking chamber for receiving a food product for cooking, a door for closing the cooking chamber, and two or more cooking elements comprising at least a grill element and an oven element, wherein the cooking elements are operable independently of one another and a controller is provided for controlling the operation of the cooking elements, the controller being configured to allow the use of both the grill element and the cooking element in a cooking cycle whilst preventing the simultaneous operation of the grill element and the oven element.

## Description

The present disclosure relates to an oven, in particular to an energy efficient oven comprising a plurality of independently operable cooking elements and a controller for controlling the operation of the cooking elements.

Various cooking apparatus exist including convection ovens, contact grills and pizza ovens which use a single heating source. Some apparatus exist which combine various types of cooking including accelerated cooking apparatus which also use microwaves to shorten cooking time. Example products include those available from TurboChef Technologies, Inc. Whilst combined cooking apparatus offer accelerated cooking, they have the disadvantages of: high cost due to their complexity; and high power requirements, which are generally greater than the available mains wall socket.

The present invention arose in a bid to provide an improved and more cost effective oven that would allow different types of food, including pizzas and sandwiches, to be cooked in a reduced time.

According to the present invention in a first aspect there is provided an oven as recited by Claim 1.

Further, preferable, features are presented in the dependent claims.

By providing multiple cooking elements and controlling their use (both simultaneous and asynchronous) it is possible to optimise and accelerate cooking whilst reducing power consumption. Different types of food may be cooked in a reduced time with the phased use of the different cooking elements tailored to the food being cooked during any cooking cycle. Different combinations/sequences of the cooking elements may be used for different foods.

According to the present invention in a further aspect, there is provided an oven comprising a housing defining a cooking chamber for receiving a food product for cooking, a door for closing the cooking chamber, and a cooking element, wherein a base of the cooking chamber is ceramic and defines a cooking surface that is heated by a base element.

The base element is preferably a radiant element. The base may comprise ceramic glass. The cooking element may comprise an oven or a grill element. There may be both an oven and a grill element provided in addition to the base element. The oven element may comprise a radiant element or a magnetron. Both a radiant element and a magnetron may be provided.

It is preferable in any of the above aspects that the total summed power of the cooking elements is greater than a power rating of the oven. The oven may have a power rating of 3.7kW or less, more preferably 3kW or less. It is further preferable that the oven is mains powered and comprises a plug for receipt by a domestic socket-outlet.

A cooking cycle is defined herein as the period between closing the oven door (having loaded the food to be cooked) and the opening of the door to remove the cooked food (following the controller completing any programmed cooking steps). The cooking cycle may additionally comprise a pre-heating step before the door is opened to insert the food to be cooked.

Whilst, as discussed below, the cooking steps implemented by the controller may be factory pre-set or user determined, it is preferable that the controller provides automatic control during the cooking cycle. Manual override means may be provided.

A plug is defined herein as an accessory having pins designed to engage with the contacts of a socket-outlet, also incorporating means for the electrical connection and mechanical retention of flexible cables or cords. A plug does not contain components which modify the electrical output from the electrical input (except where a switch and/or fuse is provided as a means of disconnecting the output from input).

Any plug is preferably in accordance with IEC TR 60083:2015 (Plugs and socket-outlets for domestic and similar general use standardized in member countries of IEC). Any plug may have a maximum output of 3.7kW.

Non-limiting embodiments will now be described, by way of example only, with reference to the accompanying drawings, in which:

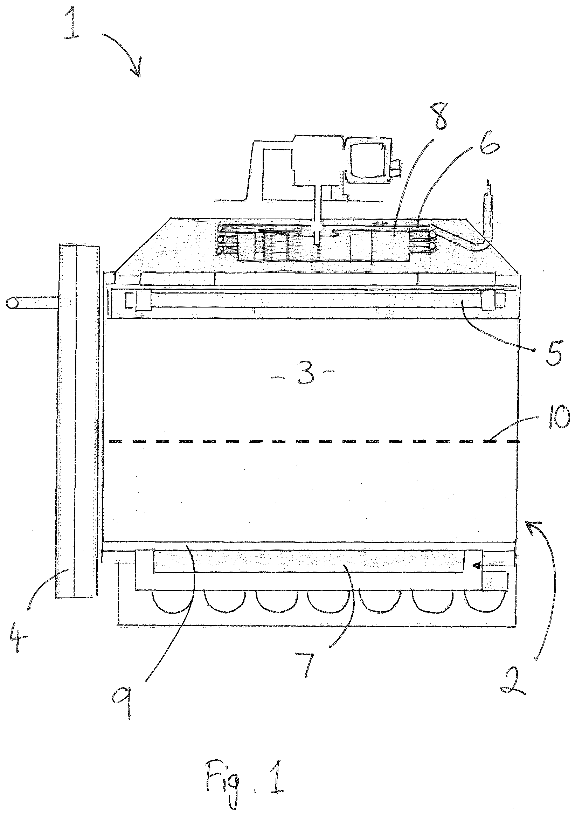

Figure 1 shows a part sectional side view of an oven according to an embodiment of the present invention; and
Figure 2 shows a partially cut away perspective view of the oven of Figure 1 with the door omitted.

With reference to the figures, there is shown an oven 1, which comprises a housing 2 defining a cooking chamber 3 for receiving a food product for cooking, a door 4 for closing the cooking chamber and a plurality of cooking elements. In the present arrangement three cooking elements 5, 6, 7 are provided. The cooking elements comprise a grill element 5, an oven element 6 and a base element 7. The cooking elements are operable independently of one another and a controller (not shown) is provided for controlling the operation of the cooking elements.

The grill, oven and base elements 5, 6, 7 preferably all comprise radiant elements. Such radiant elements may take any conventional form or construction and the present invention is not to be limited to the specific form and construction of these elements. In the present arrangement, however, the grill element is a ceramic element, the base element is a ceramic element and the oven element is a metal sheathed element. In alternative arrangements the oven element may comprise a magnetron (i.e. microwave element) instead of a radiant element.

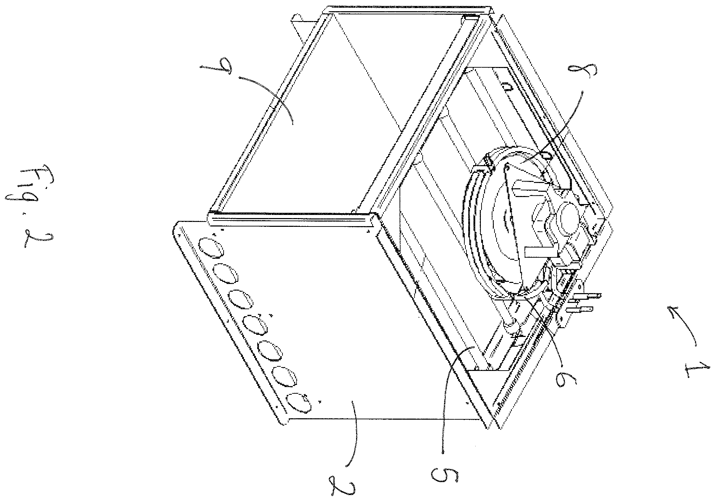

The grill element 5 may comprise a plurality of tubular elements, as shown in Figure 2. The oven element may be circular. It is preferable that an air movement means is provided for moving air heated by the oven element within the cooking chamber. In the arrangement shown a fan 8 is provided for this purpose. In alternative arrangements one or more jet nozzles may be provided instead to allow for impingement cooking. In such an impingement arrangement there may be provided a fan blowing air through a duct/enclosure which exits through the nozzles over the food. The oven element in this case may be provided within the duct/enclosure. Whilst the oven element is provided above a ceiling of the cooking chamber it may be otherwise positioned. For example, it could be provided behind the rear wall that is opposed to the door. The airflow from the air movement means is preferably biased to compensate for door opening. In the case of the fan, vents into the oven cavity may be configured such that a greater airflow is provided at a front of the cooking chamber proximal the door than in a rear of the oven cavity distal the door.

The base element is provided under a ceramic panel 9 that defines a base of the cooking chamber. In the present arrangement the panel is formed from ceramic glass. It is not limited as such. For example, it could comprise alternative ceramic materials. The base of the cooking chamber provides a cooking surface. It is particularly suited to the cooking of pizzas, as described in greater detail below..

It should be noted that whilst three cooking elements are provided in the present arrangement, there may be more cooking elements provided.

The base element may be omitted in some arrangements. In arrangements that omit the base element, the base will be of conventional form, most likely formed from metal and a microwave element will be provided. The inclusion or omission of the base element and the ceramic panel will be dependent on the foods that it is desired to cook in the oven. For example, a variant of the oven specifically provided for the cooking of pizzas may include the base for cooking, whilst a variant not aimed at the cooking of pizzas may omit the base for cooking. In other arrangements (including or omitting the base element) a microwave element, i.e. a magnetron, may be included in addition to the radiant oven element 6.

The total summed power of the cooking elements in the present arrangement exceeds 3kW. Exemplary power ratings for the oven and grill elements are 2.3kW and an exemplary power rating for the base element is 700W. It should be noted that these power ratings will vary in dependence on the specific elements used. Also, the total summed power will be dependent on the specific elements used and the specific combination of those elements. The controller is configured to phase the use of the cooking elements present during any cooking cycle so that the power rating of the oven is less than the total summed power. The controller will prevent the use of all of the cooking elements simultaneously. Most preferably, the power rating will be less than 3kW, since this allows the oven to be powered by a domestic 13A, 240V socket-outlet in the UK. The oven will be provided with a suitable plug. The power rating may be varied however and may be higher or lower than 3kW based on the specific elements and their combination and/or their control and in dependence on the socket-outlets that the oven is required to be compatible with. For mainland Europe, a power rating or 3.7kW or less will be acceptable, for example.

At least two of the cooking elements will preferably be used in any cooking cycle (simultaneously or asynchronously or a combination of both). The use of at least two different cooking elements allows for optimised/accelerated cooking. In the present arrangement, to limit the total summed power, the controller is arranged to prevent the simultaneous operation of the grill element and the oven element although both the grill element and the oven element may be used in the same cooking cycle asynchronously. The base element and/or a microwave element may be used simultaneously with either the grill element or the oven element. The controller may be configured in any cooking cycle to use one or more of the base element or the microwave element.

An exemplary cooking cycle for a pizza using an oven according to the depicted arrangement is now considered:
The oven may be pre-heated prior to insertion of a food to be cooked. In such case, the oven element alone may be switched on for pre-heating of the oven. The fan may be used to stir the air and aid thermal distribution. The base element may be used in addition to the oven element during the pre-heating stage.

For cooking, the oven element and fan remain on and the base element is switched on, the pizza is heated using the ovens air and base heat, which raises the temperature of the dough and cooks it.

After a pre-determined or user selected time, the oven element and base element are switched off and the grill element is switched on to brown the cheese and complete cooking. Because the air and base remain hot in the short term heat transfer from these source continues without the additional power requirement.

In dependence on the food to be cooked, different cooking elements may be used (in different combinations and/or sequences) during cooking cycles to give the best result for different food types. A pre-heating step may be included or omitted in any cooking cycle.

The controller may be user programmable (albeit with inbuilt constraints to limit the power rating), such that the user can select which of the cooking elements are turned on, in which sequence/combination and for how long. The controller may additionally or alternatively be provided with a number of predefined user selectable programmes/programme stages, such as pizza, sandwich, etc. to allow user-friendly optimised and focused cooking of a wide range of different products.

The controller preferably monitors the oven air temperature but could also or alternatively monitor the base temperature and top element temperatures.

The oven is most preferably provided with one or more baking shelves 10 (for foods not to be cooked directly on the base). There may be a plurality of shelves. Any of the shelves may be fixed or more preferably height adjustable in the conventional manner.

Numerous variations and modifications will be readily conceived by those skilled in the art, within the scope of the present disclosure. Various combinations of cooking elements will be readily conceived by those skilled in the art, including the introduction of any known alternative cooking element suitable for use in an oven but not specifically referenced herein. Moreover, various alternative controller configurations providing different combinations/sequences of any of the cooking elements that are provided in the oven may be implemented.

In one specific example, which comprises two or more cooking elements (selected from any of the suggested cooking elements above), the controller may be configured in any cooking cycle to use at least two of the cooking elements during the cooking cycle and to use only one of the cooking elements for at least part of the cooking cycle.

In a further specific example, there may be provided one or more cooking elements in addition to a base element, wherein the base of the cooking chamber is ceramic and defines a cooking surface that is heated by a base element. Such an arrangement may not be limited to any particular phasing of the cooking elements. The one or more cooking elements provided in addition to the base element may comprise any of the suggested cooking elements or any known alternative cooking element suitable for use in an oven.

## Claims

1. An oven comprising a housing defining a cooking chamber for receiving a food product for cooking, a door for closing the cooking chamber, and two or more cooking elements comprising at least a grill element and an oven element, wherein the cooking elements are operable independently of one another and a controller is provided for controlling the operation of the cooking elements, the controller being configured to allow the use of both the grill element and the oven element in a cooking cycle whilst preventing the simultaneous operation of the grill element and the oven element, wherein the cooking elements further comprise a base element for heating a base of the cooking chamber and/or a microwave element, and the controller is configured to allow the simultaneous operation of the base element and/or the microwave element with either the grill element or the oven element.

2. An oven as claimed in any preceding claim, wherein the controller is configured in any cooking cycle to use one or more of the base element or the microwave element.

3. An oven as claimed in any preceding claim, wherein the controller is user programmable.

4. An oven as claimed in any preceding claim, wherein the controller stores a number of user selectable cooking programmes.

5. An oven as claimed in any preceding claim, wherein the total summed power of the cooking elements is greater than a power rating of the oven.

6. An oven as claimed in any preceding claim, which has a power rating of 3.7kW or less.

7. An oven as claimed in any preceding claim, which has a power rating of 3kW or less.

8. An oven as claimed in any preceding claim, which is mains powered and comprises a plug for receipt by a domestic socket-outlet.

9. An oven as claimed in any preceding claim, wherein the oven element comprises a radiant element or a magnetron.

10. An oven as claimed in any preceding claim, wherein an air movement means is provided for moving air heated by the oven element within the cooking chamber.

11. An oven as claimed in Claim 10 wherein the air movement means comprises a fan or one or more jet nozzles.

12. An oven as claimed in Claim 10, wherein the oven element and a fan are provided within a duct or enclosure, the duct or enclosure comprising a plurality of nozzles through which air heated by the oven element and blown by the fan exits.

13. An oven as claimed in any preceding claim dependent thereon, wherein the base of the cooking chamber is ceramic and defines a cooking surface that is heated by the base element.

14. An oven as claimed in Claim 13, wherein the base is ceramic glass.

15. An oven as claimed in Claim 13 or 14, wherein the base element is a radiant element.
